# EUROPEAN PATENT APPLICATION

(11) **EP 1 130 300 A1**
(43) Date of publication of application: **05.09.2001**
(21) Application number: 00104139.1
(22) Date of filing: 29.02.2000
(51) Int. Cl.: F16K 31/06

(54) **Method for controlling pulse width modulation-operated solenoid valves**

(71) Applicant: WHIRLPOOL CORPORATION, Benton Harbor Michigan 49022 (US)
(72) Inventor: Santacatterina, Gianpiero, V.le G. Borghi 27, 21025 Comerio (IT); Braghini, Giorgio, V.le G. Borghi 27, 21025 Comerio (IT)
(74) Representative: Guerci, Alessandro

(57) **Abstract**

A method for controlling a pulse width modulation (PWM) solenoid valve, particularly when the valve is used in cooking domestic appliances for adjusting the gas flow to the burners, comprises the feeding to the valve of a setting signal and the detection (42) of the related electric characteristic vs. time signal; such signal is analysed by an electronic control unit (40) by which the valve is driven, in order to get information on functional characteristics of the valve, such information being used by the electronic control unit in order to adjust the braking of the valve for reducing noise and vibrations thereof.

## Description

This invention relates to a method for controlling a pulse width modulation (PWM) solenoid valve, in which closure and/or opening of the valve are braked by control signals fed to the solenoid valve through an electronic control unit, for instance a microprocessor or a digital signal processor (DSP). The invention also relates to a control system for pulse width modulation (PWM) solenoid valves, particularly for valves comprising a hollow body defining a chamber, an inlet duct and an outlet duct for a fluid opening into said chamber, an oscillating plate of magnetic material arranged in said chamber and having a portion adapted to cooperate with a seat of the valve for cutting off the passage of fluid, an electromagnet arranged in said chamber for controlling said plate, and an elastic element arranged in said chamber and adapted to urge the plate toward a position in which the passage of fluid is cut off. The system is of the type in which the valve opening pulses are provided by a electronic control unit or the like, that modulates the width of said pulses on the basis of the user-set flow rate of the fluid (generally fuel gas) passing through the valve.

It is well known that PWM valves suffer the problem of noise and vibrations due to the high number of repeated collision of the movable portion of the valve against its seat. Moreover this problem is particularly serious for applications in domestic appliances, where the environment is normally quiet.

EP-A-773394 and EP-A-851164 suggests two possible solutions of the above problem. EP-A-773394 suggests to apply to the mobile core of the valve a force counteracting the spring while the mobile core is moving towards the valve seat in order to reduce the energy involved in the impact between the valve member and the mobile core seat. For triggering the counteracting force, an electric feedback signal is used which contains information on the commencement of movement of the mobile core. EP-A-851164 discloses a open-loop control signal for PWM valves in which the closure and the opening of the solenoid valve is braked by control signals comprising trains or successions of pulses imposed on or cut-off from the PWM signal.

Even if the above-mentioned technical solutions reduce the noise and vibrations of the valve, there is the need of further improving such reduction in order to have a PWM that is perfectly fit for a quiet environment too.

According to the invention, the solenoid valve is fed with a predetermined setting signal and a related electric characterisitc vs. time signal is detected, the electric characteritic vs. time signal is analysed by the electronic control unit in order to get information on functional characteristics of the valve; and such information are used by the electronic control unit in order to adjust the braking of the valve for reducing noise and vibrations thereof. Preferably said functional characteristics are the opening time and the closing time of the valve. More preferably the setting signal is fed to the valve before starting the normal pulse width modulation of the valve. According to the above features the impact force of the movable element on the PWM valve body during the opening and closing phase is decreased, reducing the noise and the vibration generated of up to 10 dBa. The control is based on a "closed loop system" that, by analysing the current and/or the voltage of the valve, is able to adapt the valve control algorithm to compensate mechanical tolerances from valve to valve, variation during time (ageing), temperature variation and different duty cycles.

With the method according to the invention it is possible to produce a lighter valve (eliminating the metallic shell around the valve, the suspension for vibration reduction, etc) and improve the valve reliability (reducing the mechanical stress). The invention will be more apparent from the detailed description of a preferred embodiment thereof given hereinafter by way of non-limiting example with reference to the accompanying drawing, in which:
- Figure 1 is a schematic section through a solenoid valve used according to the method of the present invention;
- Figure 2 shows a schematic valve control circuit;
- Figure 3 shows the variation with time of an electric characteristic of the valve in a setting phase according to the invention;
- Figures 4 and 5 are enlarged views of portions of Figure 3; and

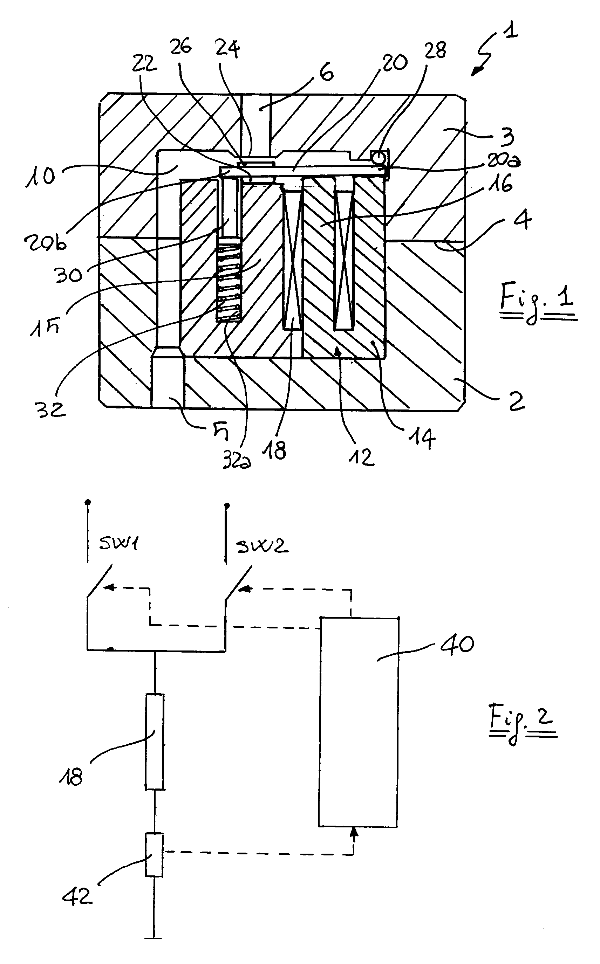

- Figure 6 shows a comparison between the sound level of a PWM valve which does not use the method according to the invention and a valve which uses it. The valves to which the invention relates, one of which is shown schematically in Figure 1, are two-state shutoff valves (open/closed). Such valves comprise a body 1 of non-magnetic material, for example a light metal alloy. The body 1 comprises a pair of members 2 and 3 that fit together along a plane 4. The member 2 is integral with an inlet duct 5 whose end may be threaded for connection with a gas supply system. The member 3 is integral with an outlet duct 6 that is connected to a gas domestic appliance, for instance a gas-cooking hob. The two members 2 and 3 enclose in a fluid-tight manner a chamber 10 into which the two ducts 5 and 6 open. The solenoid valve comprises an electromagnet generally designated 12 whose magnetic circuit comprises a U-shaped core 14. The conventional electric coil 18 of the electromagnet is wound around a portion 16 of the core 14 and its terminals are connected to the drive circuit. The magnetic circuit comprises an armature of magnetic material, which comprises an oscillating plate 20 able to abut either, in an open configuration of the valve (shown in Figure 1) against a support block 15 of non-magnetic material through the interposition of an element 22 of elastomeric material or, in a closed configuration of the valve, against a seat 24 through the interposition of an element 26 of elastomeric material. The member 3 is provided with a seat that accommodates a pivot member 28 of elastomeric material, against which a first end 20a of the plate 20 is applied and can be pivoted. A second end 20b of the plate 20 is urged by a push rod 30 toward the valve seat 24. Between the block 15 and the push rod 30 a spring 32 is interposed, which is arranged in a hole 32a of the support block 15.

When the electromagnet 12 is energised, the portion 16 of the core 14 attracts the plate 20 which pivots downwards (with reference to Figure 1) round the pivot member 28 and bears against the supporting block 15. In this configuration the air gap between the plate 20 and the portion 16 of the core 14 is reduced substantially to zero. The solenoid valve is thus opened and the gas under pressure can flow through the chamber 10. When the coil 12 ceases to be energised, the elastic force of the push rod 30 assists in closing the valve. Due to the low mass of the plate 20 the solenoid valve has very short response times and can be operated at high frequency.

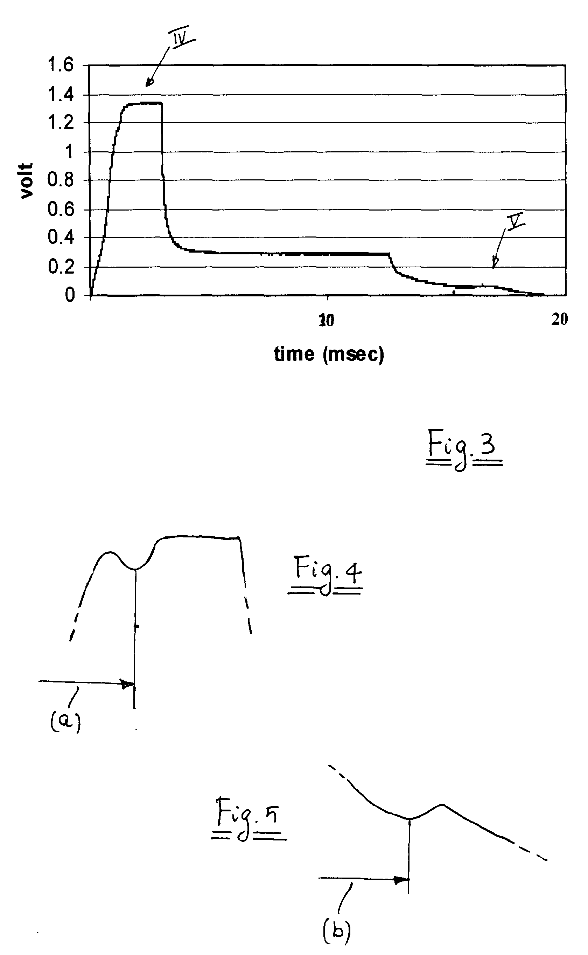

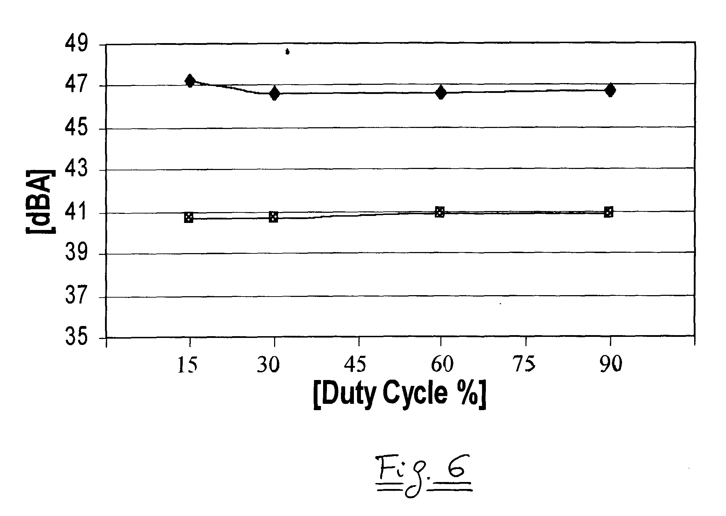

With reference to Figure 2, an electronic circuit for performing the method according to the invention comprises a electronic control unit 40 which is connected to switches SW1 and SW2, to the valve coil 18 and to a current sensor 42. According to the present invention, the valve needs a setting before normal working and, as a first step, the control has to be adjusted to the specific valve connected. A particular drive signal, comprising a kicker signal to move the oscillating plate from a static closed condition to an open position and a maintaining signal at lower voltage to fix the valve in the opening condition, is sent to the valve and the coil current is acquired through the current sensor 42. A typical diagram of current vs. time (derived from the above drive signal) is shown in Figure 3. Trough the analyses of the current signal the opening time (a), the closing time (b) and the coil resistance (R) of the specific valve are measured. The opening time (a) is clearly visible in Figure 4, which shows the big variation of current due to the substantial closure of the air gap between the plate 20 and the core 16 of the solenoid valve. When the plate 20 impacts at the end of the opening stroke, the derivative of the current changes abruptly. The applicant has observed that finding out the zero-cross of the second derivative gives an evaluation of the opening time (a). Similarly, Figure 5 shows a sharp variation in inductance and current due to substantial opening of the air gap when the plate 20 impacts on the valve seat 24, therefore allowing a measurement of the closing time (b) of the valve by evaluating a variation on the current derivative at the moment of the impact. Starting from a standard "valve control sequence" stored in the electronic control unit 40 (therefore with a standard train of pulses for braking closure and opening of the valve), a first compensation is done based on the opening and on the closing time measured. This is done in order to adapt the valve control braking train of pulses to the specific mechanical characteristic of the valve connected, compensating the mechanical tolerances (for example spring tolerance, coil tolerance, etc). The train of pulses are adjusted for instance by varying their timing and/or by deleting some pulses and/or by increasing/decreasing their duration in order to have a sort of shift of the centre of gravity of the whole train of pulses which fits the assessed opening and closing times of the valve. After having performed the setting cycle, the system can start the normal PWM control function, adjusting the gas flow based on duty cycle set by the user. Based on the specific duty cycle selected, the valve braking trains of pulses are now modified in order to compensate the effect of the magnetic hysteresys of the magnetic part. Through the continuous measurement of the current during the functioning of the valve, it is possible to monitor the coil resistance variation (that is directly related to coil temperature). With this information the valve train of pulses are constantly updated to compensate the effect of the temperature variation on the valve.

All the above adjustments of the train of pulses are performed in real time by the electronic control unit that, starting from a multidimensional look-up standard table and according to opening time (a), closing time (b), coil resistance R and duty cycle, computes the appropriate patterns of braking pulses.. The above look-up table is an integral part of the software used for adjusting the function of the valve, and can vary for each type of valve and/or application. The above look-up table can be calculated directly by the electronic control unit as a function of the above characteristics (a), (b), R and duty cycle.

The setting cycle according to the invention may be carried out not only before the normal operation of the PWM valve is started, but also during such normal operation, since the duration of the setting cycle is comparable with the duration of a single duty cycle. Moreover, in order to increase the reliability of the valve adjustment, the setting cycle may be repeated and an average value of opening time and closing time calculated accordingly.

The information obtained trough the valve coil current analysis can be used also for characterising the valve at the beginning (for instance in factory testing, incoming testing, product testing, service installation testing) or during its life (on product test, service remote monitoring, fault indication & prevention, etc). The valve coil current analysis and data thereof can be used also for a remote service test, for instance through an internet connection if the product is provided with such connection. The information on the valve that is possible to collect or monitor with the method and control system according to the invention comprises:
- valve coil resistance
- opening time
- closing time
- coil charging & discharging time ( system inductance)
- anchor bouncing

By monitoring the variation during the time or the ratio between the above data could give indication on some valve conditions like:
- valve blocked (open or closed)
- valve instability
- valve coil temperature
- spring degradation
- coil magnetic efficiency variation

The method according to the invention can be used not only for PWM solenoid valves, but also for any kind of relay in order to avoid reed bouncing (and related arc-over) and/or for checking whether a relay is open or closed and for assessing the decay of the relay.

### EXAMPLE

A valve as the one shown in Figure 1 is used for controlling the flow of methane to a rapid burner of a gas-cooking hob. The valve is controlled through a PWM control system as disclosed in EP-A-851164, and the sound level of such valve is shown in Figure 6 vs. duty cycle (upper line) for standard working condition (frequency 40 Hz, temperature 20°C). Then the valve is provided with a control system according to the invention, in which a setting signal is fed to the valve before normal operation of the valve is started.

The system is based on PC and a MicroController (Motorola HC11) system that generates two signals to enable the two driving voltages (+24V and +6V) of a driver. The system is controlled by a serial line from the PC with a National Acquisition Board, which calculates the pattern at run time and sends it to the system.

The system generates the control signal on the input of a working frequency that can be set from 10 up to 200 Hz and there is the possibility to store a default start-up value in EEPROM. The duty cycle can be changed at run time between 0% and 100%.

On 0% the system simply turns off all signals.

On 100% the system generates a kicker signal to open the electromechanical valve. Later it generates continuously a maintaining signal.

On all other values the system checks if the set duty is compatible with the set frequency and the requested brake patterns. Otherwise it saturates the duty cycle to a minimum or to a maximum value. The "front" brake pattern that controls the opening of the valve is generally made by a first 24V step to start the plate or reed. After the first step it is made by some 0-5-24V steps to control the reed's speed. The duration of the first step is very important as too long one speeds up too much the reed causing an impossibility to stop it on time. On the other hand a too short one causes a too slow movement of the reed, so that when the "front" brake finishes and the maintaining signal starts, the reed is too far from the coil and it closes again.

The pattern that controls the closure of the valve ("late" brake) is generally made by a first 0V period to release the reed and to wait that the spring starts to close the reed. Later some peaks (of 0-5-24V) control the speed of the reed.

As for the "front" brake, the length of one or more steps is modulated to control that the impact instant will be during the"late" brake. The system reads the current acquiring the voltage on a shunt series resistor.

The voltage is acquired with a sampling rate of 250 kHz by the acquisition board. To calculate the open and close time is necessary to work on the derivative of the signal.

To work with a valve it is necessary to evaluate the *"Open Time"* and the *"Close Time".* The acquisition of data must be done at the beginning of the work period (cold set-up).

All the measurements are done on four different acquisitions. The output data will be an average of the four different results.

In a brake table are contained all the data necessary to calculate the two brakes for a standard valve used in the example, based on the "open time" and "close time".

The table is stored in the electronic control unit and the data present in the table are shape of the "brakes", limits of duty cycle working areas, reference resistances and reference mechanical times.

The data relating to the shape of the "brakes" contain the number of peaks for each brake (6 peaks for the "front" brake and 11 peaks for the "late" brake).

Furthermore for each valve there is the sequence of voltage command that the system has to generate.

The range of duty (0%-100%) is divided in some different areas. For each of those there are little difference in algorithm control.

The system calculates the two "brakes" for each value of set duty (on changing or on user's request), for each resistance read (on changing or on user's request), and for the mechanical times.

The resistance is measured driving the coil with a fixed voltage and reading the injected current by sampling the voltage on a shunt.

In the example the setting signal comprises a kicker signal of 24 V for 3 msec and by a following maintaining signal of 5 V for 8,5 msec. According to the current / time diagram measured through the current sensor, opening time and closing time are measures and the train of braking pulses is adjusted accordingly

The initial valve measurement are as follows:
- Opening time (a):: 1.320 msec
- Closing time (b):: 1.955 msec
- Resistance R:: 15.8 ohm

According to the above measurements, the electronic control unit calculates the following braking pattern of pulses with 6 opening braking steps at 50% duty cycle and 11 closing braking steps at 50% duty cycle. Such pattern comprises, for the opening brake:
1 - pulse at 24 V for 1.098 msec
2 - pulse at 5 V for 0.402 msec
3 - pause at 0 V for 0.060 msec
4 - pulse at 24 V for 0.150 msec
5 - pulse at 5 V for 0.250 msec
6 - pulse at 24 V for 0.250 msec
and for the closing brake:
1 - pause at 0 V for 0.340 msec
2 - pulse at 24 V for 0.199 msec
3 - pulse at 5 V for 0.300 msec
4 - pulse at 24 V for 0.180 msec
5 - pulse at 5 V for 0.400 msec
6 - pause at 0 V for 0.150 msec
7 - pulse at 24 V for 0.070 msec
8 - pause at 0 V for 0.070 msec
9 - pulse at 24 V for 0.060 msec
10 - pause at 0 V for 0.079 msec
11 - pulse at 24 V for 0.060 msec

The result, in terms of sound power level, is shown in Figure 6 (lower line). A reduction of more than 5 dBA is obtained with the control system according to the invention.

## Claims

1. Method for controlling a pulse width modulation (PWM) solenoid valve, in which closure and/or opening of the valve are braked by control signals fed to the solenoid valve through an electronic control unit, **characterised in that**
- the valve is fed with a predetermined setting signal and a related electric characteristic vs. time signal is detected;
- the electric characteristic vs. time signal is analysed by the electronic control unit in order to get information on functional characteristics of the valve; and
- such information is used by the electronic control unit in order to adjust the braking of the valve for reducing noise and vibrations thereof.

2. Method according to claim 1, **characterised in that** said functional characteristics are the opening time and the closing time of the valve.

3. Method according to claim 1 or claim 2, **characterised in that** the setting signal is fed to the valve before starting the normal pulse width modulation of the valve.

4. Method according to claim 1 or 2, **characterised in that** the setting signal is fed to the valve during the normal modulation of the valve.

5. Method according to any of the preceding claims, **characterised in that** the electronic control unit is fed with data on the coil resistance of the solenoid valve, such data being used by the electronic control unit in order to further adjust the braking of the valve by compensating temperature variations thereof.

6. Method according to any of the preceding claims, **characterised in that** the electronic control unit is fed with data on the duty cycle of the valve, such data being used by the electronic control unit in order to further adjust the braking of the valve by compensating the magnetic hysteresis effects.

7. Method according to any of the preceding claims, **characterised in that** the electric characteristic vs. time signal is a current or voltage vs. time signal.

8. Method according to any of the preceding claims, **characterised in that** the setting signal comprises a first portion in which a predetermined voltage is fed to the valve and a last portion in which the driving voltage is reduced substantially to zero, the overall duration of the setting signal being comparable with the pulse duration of the PWM valve.

9. Method according to any of the preceding claims, in which the braking control signals comprise trains or succession of pulses imposed on or cut-off from the PWM signal, **characterised in that** the braking adjustment is performed by varying the timing or the duration or the number or the voltage of said pulses or a combination thereof.

10. Method according to any of the preceding claims, **characterised in that** the functional characteristics of the valve are used for characterising the valve at the beginning or during its life.

11. A control system for pulse width modulation (PWM) solenoid valves, particularly for valves comprising:
- a hollow body defining a chamber;
- an inlet duct and an outlet duct for the fluid opening into said chamber;
- an osicllating plate of magnetic material arranged in said chamber and having a portion adapted to cooperate with a seat of the valve for cutting off the passage of fluid;
- an electromagnet arranged in said chamber for controlling said plate, and
- an elastic element arranged in said chamber and adapted to urge the plate toward a position in which the passage of fluid is cut off,
**characterised in that** it comprises a electronic control unit adapted to feed the electromagnet with a predetermined setting signal in order to detect a related electric characteristic vs. time signal, the electronic control unit being also adapted to analyse said electric characteristic vs. time signal in order to get information on functional characteristics of the valve, such information being used by the electronic control unit for adjusting the braking of the valve.

12. A control system according to claim 11, **characterised in that** said functional characteristics are the opening time and the closing time of the valve.

13. A control system according to claim 11, **characterised in that** the electronic control unit is adapted to be provided with data on the coil resistance of the solenoid valve, such data being used by the electronic control unit in order to further adjust the braking of the valve by compensating temperature variations thereof.

14. A control system according to claim 11 or 13, **characterised in that** the electronic control unit is adapted to be provided with data on the duty cycle of the valve, such data being used by the electronic control unit in order to further adjust the braking of the valve by compensating the magnetic hysteresis effects.

15. A control system according to any of the claims 8 - 10, **characterised in that** the electric characteristic vs. time signal is a current vs. time signal.

16. Gas cooking domestic appliance, characterised it comprise a control system according to any of claims 8 - 11.
